(19) **Europäisches Patentamt / European Patent Office / Office européen des brevets**

(11) **EP 3 003 823 B2**

(12) **NOUVEAU FASCICULE DE BREVET EUROPEEN**
Après la procédure d'opposition

(45) Date de publication et mention de la décision concernant l'opposition:
**16.11.2022 Bulletin 2022/46**

(45) Mention de la délivrance du brevet:
**29.03.2017 Bulletin 2017/13**

(21) Numéro de dépôt: **14733241.5**

(22) Date de dépôt: **03.06.2014**

(51) Classification Internationale des Brevets (IPC):
**B62D 5/04** *(2006.01)* **B60R 25/02** *(2013.01)*

(52) Classification Coopérative des Brevets (CPC):
**B62D 5/0469; B60R 25/02**

(86) Numéro de dépôt international:
**PCT/FR2014/051311**

(87) Numéro de publication internationale:
**WO 2014/195625 (11.12.2014 Gazette 2014/50)**

(54) **UTILISATION D'UN MOTEUR D'ASSISTANCE DE DIRECTION POUR SIMULER UNE BUTÉE DE FIN DE COURSE DE LADITE DIRECTION**

VERWENDUNG EINES SERVOLENKMOTORS ZUR SIMULATION EINES ANSCHLAGS FÜR DIESE LENKUNG

USE OF A POWER-STEERING MOTOR TO SIMULATE AN END-OF-TRAVEL STOP FOR SAID STEERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2013 FR 1355131**

(43) Date de publication de la demande:
**13.04.2016 Bulletin 2016/15**

(73) Titulaire: **JTEKT Europe**
**69540 Irigny (FR)**

(72) Inventeurs:
• **BARTHOMEUF, Julien**
**69230 Saint Genis Laval (FR)**

• **MOULAIRE, Pascal**
**69890 La Tour De Salvagny (FR)**
• **PILAZ, Pierre**
**69170 Saint Marcel L'eclaire (FR)**

(74) Mandataire: **Germain Maureau**
**12, rue Boileau**
**69006 Lyon (FR)**

(56) Documents cités:
EP-A1- 1 167 158    EP-A1- 1 234 734
EP-A2- 1 407 959    EP-A2- 1 407 959
WO-A1-01/20412    WO-A1-03/043869
DE-A1- 10 244 067    DE-A1-102006 003 428
JP-A- 2005 082 119    US-A1- 2001 026 613

EP 3 003 823 B2

**Description**

La présente invention se rapporte au domaine général des dispositifs de direction assistée pour véhicules, et notamment pour véhicules automobiles.

Usuellement, de tels dispositifs de direction assistée comprennent un organe actionneur, du genre crémaillère, qui est monté mobile en translation dans un carter de direction fixé au châssis du véhicule, et dont le déplacement est commandé par une colonne de direction, cette dernière étant contrôlée par un volant de conduite et portant un pignon qui vient en prise sur la crémaillère.

Chacune des extrémités dudit organe actionneur est généralement reliée, au moyen d'une biellette, à un organe effecteur, typiquement formé par une roue directrice portée par un porte-fusée orientable en lacet.

Un moteur d'assistance, qui vient généralement en prise sur la colonne de direction ou sur la crémaillère, par exemple par l'intermédiaire d'un réducteur à roue tangente et vis sans fin, complète le dispositif afin d'assister, lors de la manoeuvre de l'organe actionneur, l'effort manuel qu'exerce le conducteur sur le volant.

Si de tels dispositifs de direction assistée apportent généralement satisfaction, notamment en ce qu'ils rendent la conduite plus agréable et moins fatigante, ils peuvent toutefois présenter certains inconvénients.

En effet, le débattement maximal de la crémaillère est limité, par construction, par des butées mécaniques de fin de course. Généralement, la mise en butée intervient par l'entrée en contact des biellettes contre les extrémités du carter de direction lui-même, ou contre des limiteurs de course ajoutés aux extrémités dudit carter de direction.

Or, une telle mise en butée, lors du braquage, est susceptible de générer un choc dans la direction, et ainsi de provoquer l'apparition de bruits, voire de causer une détérioration des organes mécaniques de la direction.

Les objets assignés à l'invention visent par conséquent à remédier à ces inconvénients et à proposer un nouveau système de direction assistée qui, tout en permettant une conduite confortable et intuitive du véhicule, préserve la direction des chocs, bruits et dommages potentiels liés au braquage de la direction.

Les objets assignés à l'invention sont atteints au moyen d'un procédé de gestion d'un moteur d'assistance de direction, au cours duquel on élabore une consigne d'assistance destinée à être appliquée à un moteur d'assistance conçu pour fournir un effort d'assistance à la manoeuvre d'un organe actionneur de direction, du genre crémaillère, ledit organe actionneur étant monté mobile au moins entre une première position et une seconde position, distinctes l'une de l'autre, qui délimitent une course fonctionnelle dudit organe actionneur permettant à ce dernier de modifier l'angle d'orientation d'un organe effecteur de direction, du genre roue directrice, ledit procédé étant caractérisé en ce qu'il comporte :

- une étape (a) de définition d'un seuil virtuel de fin de course, au cours duquel on choisit au moins un seuil virtuel de fin de course qui correspond à une position d'engagement fictif de l'organe actionneur contre une butée virtuelle, position d'engagement fictif qui est strictement comprise entre la première position et la seconde position,
- une étape (b) d'évaluation de position, au cours de laquelle on évalue la position instantanée de l'organe actionneur et on la compare avec le seuil virtuel de fin de course afin de détecter un franchissement dudit seuil virtuel de fin de course par ledit organe actionneur, et, si l'on détecte que l'organe actionneur a franchi ledit seuil virtuel de fin de course dans un sens de franchissement prédéterminé,
- une étape (c) de simulation de butée de fin de course au cours de laquelle on inclut dans la consigne d'assistance une consigne de résistance qui simule l'effet d'une butée mécanique en s'opposant à la progression, dans le sens de franchissement considéré, de l'organe actionneur au-delà du seuil virtuel de fin de course, de manière à empêcher l'organe actionneur d'atteindre sa position de mise en butée contre des butées réelles de la direction.

Avantageusement, l'invention permet ainsi d'utiliser le moteur d'assistance pour créer artificiellement une ou plusieurs butée(s) virtuelle(s) qui précède(nt) les butées matérielles effectives de fin de course des organes mécaniques de la direction, et plus particulièrement de l'organe actionneur, butées virtuelles qui empêchent ainsi lesdits organes mécaniques de venir heurter lesdites butées réelles.

En d'autres termes, l'invention permet d'ajouter aux butées mécaniques conventionnelles, et en pratique de substituer auxdites butées mécaniques conventionnelles, des butées virtuelles, qui sont simulées par une programmation adéquate des lois applicables au moteur d'assistance.

En simulant, grâce au moteur, un effet de butée, et plus particulièrement une résistance de la direction à l'encontre d'une intensification du braquage au-delà du seuil virtuel de fin de course, l'invention permet avantageusement de ralentir et de durcir le mouvement de braquage à distance des butées réelles de la direction, et empêcher l'organe actionneur d'atteindre sa position de mise en butée contre lesdites butées réelles.

De la sorte, on s'affranchit d'un contact mécanique, ou au moins d'une collision, des organes mécaniques de la direction, et plus particulièrement de l'organe actionneur, avec des butées réelles.

En d'autres termes, en prévoyant une prise en charge et un amortissement motorisé de la fin de course de l'organe actionneur, et plus globalement de la direction, au niveau d'une butée virtuelle, alors même que l'organe actionneur dispose encore d'une réserve de course réelle entre le seuil virtuel marquant ladite butée virtuelle et la véritable limite de course placée en retrait, au-delà de ladite butée virtuelle, on préserve avantageusement des chocs les organes mécaniques de la direction, en empêchant leur mise en butée réelle.

En outre, il est remarquable que l'utilisation de butées virtuelles ne perturbe pas, lors du fonctionnement normal de la direction, les sensations et l'agrément de conduite, dans la mesure où l'invention permet toujours de restituer au conducteur, à l'approche des limites de braquage effectives de la direction, un effort résistant qui simule de manière très fidèle et intuitive un comportement prévisible d'entrée en butée.

A ce titre, l'utilisation d'une butée virtuelle, dont on peut avantageusement programmer, voire modifier, les caractéristiques, permet même de simuler, en fin de braquage, notamment lors de manoeuvres de stationnement, un comportement d'entrée en butée plus progressif (plus doux) que celui qui résulte d'un blocage mécanique usuel de fin de course.

L'invention procure donc à la fois un grand confort d'utilisation et une excellente sécurité de fonctionnement de la direction assistée.

Par ailleurs, le caractère virtuel, programmable, de la butée prévue par l'invention permet avantageusement de paramétrer librement, et donc de choisir, ou de modifier au besoin, le nombre et la position du ou des seuils virtuels de fin de course, c'est-à-dire le nombre et la position de la ou des butées virtuelles, et/ou les caractéristiques (raideur, amortissement, etc.) desdites butées virtuelles.

L'invention offre donc une polyvalence de réglage et une capacité d'adaptation bien supérieures à celles des limiteurs de course mécaniques.

Tel que cela sera détaillé ci-après, l'utilisation de butées virtuelles peut en outre contribuer à conférer à la direction assistée des fonctions additionnelles, par exemple d'antivol, de sécurité anti-braquage à grande vitesse, ou de réglage de la symétrie du mécanisme de direction qui contrôle le train roulant portant les roues directrices.

Enfin, il est remarquable que, la mise en oeuvre de l'invention intervenant par une simple programmation du calculateur gérant le moteur d'assistance de direction, il est envisageable d'appliquer l'invention, en rattrapage, à la plupart des dispositifs de direction assistée des véhicules déjà en circulation.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue schématique, le principe de positionnement de seuils virtuels de fin de course permettant de limiter la course autorisée d'organes de direction, et plus particulièrement d'un volant de conduite et de la crémaillère de direction pilotée par ce dernier, par rapport à la course mécanique réelle totale de ces organes de direction.

La figure 2 illustre, selon un schéma-bloc, le principe d'élaboration et d'application de la consigne d'assistance selon l'invention, comprenant l'élaboration d'une première consigne d'assistance et l'ajout à cette dernière d'une éventuelle consigne de résistance simulant une butée virtuelle de fin de course.

La figure 3 illustre une modélisation de butée virtuelle ressort-amortisseur pouvant être simulée par le moteur d'assistance.

La figure 4 illustre, sous forme d'un schéma-bloc, la mise en oeuvre de la butée ressort-amortisseur de la figure 3.

La figure 5 illustre une modélisation de butée virtuelle masse-ressort-amortisseur pouvant être simulée par le moteur d'assistance.

La figure 6 illustre, sous forme d'un schéma-bloc, la mise en oeuvre de la butée masse-ressort-amortisseur de la figure 5.

L'invention concerne un procédé de gestion d'un moteur 1 d'assistance de direction, au cours duquel on élabore une consigne d'assistance Ctot destinée à être appliquée à un moteur d'assistance 1 conçu pour fournir un effort d'assistance (« *Effort assistance* ») à la manoeuvre d'un organe actionneur 2 de direction 5, du genre crémaillère, ledit organe actionneur 2 étant monté mobile au moins entre une première position P1 et une seconde position P2, distinctes l'une de l'autre, qui délimitent une course fonctionnelle LO dudit organe actionneur 2 permettant à ce dernier de modifier l'angle d'orientation d'un organe effecteur de direction 3, 4, du genre roue directrice.

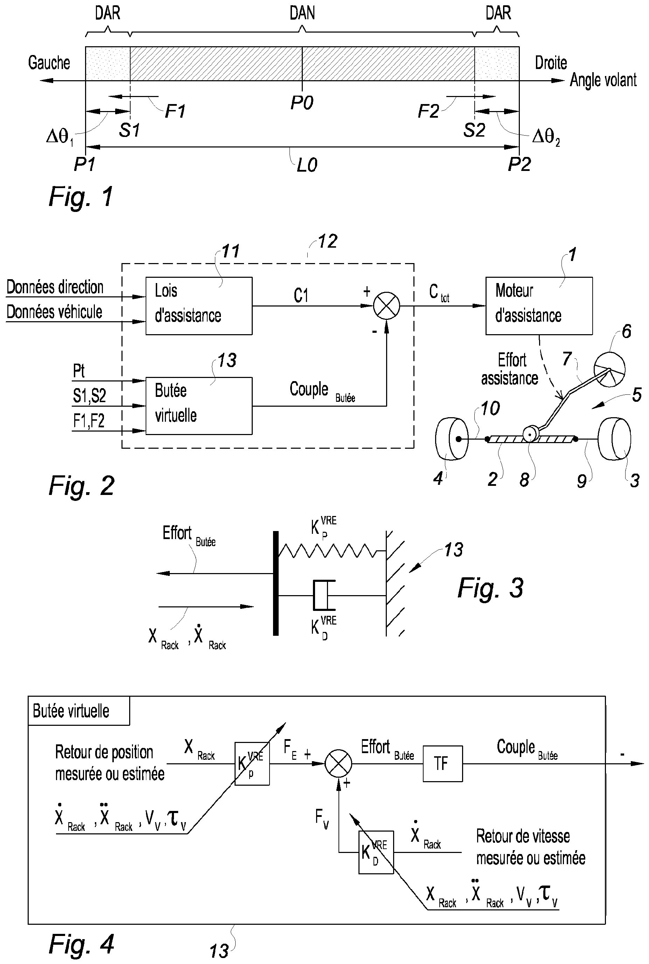

Tel que cela est illustré sur la figure 2, le dispositif de direction 5 comprend de préférence un volant de conduite 6 destiné à commander le déplacement de l'organe actionneur 2, préférentiellement par l'intermédiaire d'une colonne de direction 7.

De préférence, l'organe actionneur 2 est formé par une crémaillère montée coulissante dans carter de direction, lui-même fixé au châssis du véhicule et non représenté. Un pignon 8 fixé à la colonne de direction 7 vient en prise sur ladite crémaillère 2.

Les extrémités de la crémaillère 2 sont reliées à des biellettes de direction 9, 10 qui transmettent, de préférence via des porte-fusées, un déplacement aux roues directrices gauche 3 et droite 4 afin de modifier l'orientation en lacet desdites roues (c'est-à-dire leur angle de braquage).

Par simple commodité de description, on considérera par convention que la première position P1 correspond à une position extrémale de l'organe actionneur 2 en situation de braquage maximal à gauche, c'est-à-dire à une limite matérielle gauche de fin de course (au-delà de laquelle le dispositif de direction 5 ne peut plus, fonctionnellement, par construction, braquer davantage à gauche), et la position P2 à une position extrémale de l'organe actionneur 2 en situation de braquage maximal à droite, c'est-à-dire à une limite matérielle droite de fin de course (au-delà de laquelle le dispositif de direction 5 ne peut plus, fonctionnellement, par construction, braquer davantage à droite).

Ces première et seconde positions P1, P2 correspondront de préférence à des positions de mise en butée mécanique réelle de la direction 5, dans lesquelles le déplacement de l'organe actionneur 2 est bloqué et ne peut plus braquer davantage les organes effecteurs 3, 4.

Lesdites première et seconde positions P1, P2 pourront plus particulièrement correspondre à des positions de mise en butée des extrémités de la crémaillère 2 ou des biellettes 9, 10 contre les extrémités du carter de direction.

Le moteur d'assistance 1 est agencé pour fournir un effort d'assistance (« *Effort assistance* »), et plus préférentiellement un couple d'assistance, qui correspond ici à la consigne d'assistance Ctot et qui est appliqué à l'organe actionneur 2 pour assister la manoeuvre de roues directrices 3, 4, selon des lois d'assistance 11 prédéterminées, stockées dans un mémoire non volatile d'un calculateur 12 embarqué.

De manière connue en soi, de telles lois d'assistance 11 permettent de calculer une première consigne d'assistance C1 en fonction de chaque situation de vie du véhicule, et plus particulièrement, tel que cela est illustré sur la figure 2, en fonction d'une part de données représentatives de l'état du dispositif de direction 5 (« *Données direction* »), parmi lesquelles le couple $\tau_v$ exercé par le conducteur sur le volant 6, et/ou la position angulaire et/ou la vitesse angulaire dudit volant 6, et/ou la position ou la vitesse angulaire de l'arbre du moteur d'assistance 1, et d'autre part de données représentatives du comportement dynamique du véhicule (« *Données véhicule* »), telles que la vitesse longitudinale de déplacement, la vitesse de lacet, l'accélération latérale, etc. dudit véhicule.

L'effort (couple) d'assistance (« *Effort assistance* ») vient de préférence se superposer (algébriquement) au couple exercé par le conducteur sur le volant.

Selon une variante de réalisation, ledit effort d'assistance peut même se substituer au couple exercé par le conducteur sur le volant.

Ledit effort d'assistance peut être appliqué soit directement sur l'organe actionneur 2, soit sur la colonne de direction 7, et ce par exemple par l'intermédiaire d'un réducteur à roue tangente et vis sans fin.

Le moteur d'assistance 1 peut quant à lui être de tout type approprié, et notamment hydraulique, ou, de préférence, électrique.

Selon l'invention, le procédé comporte une étape (a) de définition d'un seuil virtuel de fin de course S1, S2, au cours duquel on choisit au moins un seuil virtuel de fin de course S1, S2 qui correspond à une position d'engagement fictif de l'organe actionneur 2 contre une butée 13 virtuelle, position d'engagement fictif qui est strictement comprise entre la première position P1 et la seconde position P2 (c'est-à-dire contenue dans l'intervalle délimité par lesdites positions P1, P2, et distante de chacune desdites positions P1, P2).

Tel que cela est illustré sur la figure 1, on pourra de préférence prévoir deux seuils virtuels de fin de course, dont un seuil virtuel gauche S1 et un seuil virtuel droit S2.

Bien que la localisation de chacun desdits seuils virtuels S1, S2 soit arbitraire et puisse être librement choisie dans l'intervalle ouvert ]P1 ;P2[, lesdits seuils virtuels S1, S2 seront de préférence disposés l'un et l'autre de part et d'autre de la position centrale (réelle) P0 de la direction 5, c'est-à-dire de part et d'autre la position P0 de l'organe actionneur 2 dans laquelle l'angle de braquage des organes directeurs 3, 4 est nul (en d'autres termes, de la position P0 de la crémaillère 2 par rapport au carter de direction dans laquelle les roues directrices 3, 4 sont droites, c'est-à-dire alignées dans l'axe longitudinal avant-arrière du véhicule).

De la sorte, le seuil virtuel gauche S1 pourra être strictement compris entre la position centrale P0 et la première position P1 correspondant à la limite réelle de braquage gauche, de sorte à précéder ladite limite de braquage gauche P1, dans le sens de manoeuvre du volant 6 correspondant à une accentuation du braquage du train roulant vers la gauche (c'est-à-dire allant de la position centrale P0 vers la position extrémale gauche P1).

De manière analogue, le seuil virtuel droit S2 pourra être strictement compris entre la position centrale P0 et la seconde position P2 correspondant à la limite réelle de braquage droite, de sorte à précéder ladite limite de braquage droite P2, dans le sens de manoeuvre du volant 6 correspondant à une accentuation du braquage du train roulant vers la droite (c'est-à-dire allant de la position centrale P0 vers la position extrémale droite P2).

De façon particulièrement préférentielle, le seuil virtuel gauche S1 et le seuil virtuel droit S2 seront disposés de façon symétrique l'un de l'autre, par rapport à la position centrale P0.

En pratique, la course utile de l'organe actionneur 2, ou, de manière équivalente, la course utile du volant 6, comprise entre le premier seuil virtuel S1 et le second seuil virtuel S2 sera donc plus courte que la course fonctionnelle LO réelle.

Le procédé conforme à l'invention comporte également une étape (b) d'évaluation de position, au cours de laquelle on évalue la position instantanée Pt de l'organe actionneur 2 et on la compare avec le seuil virtuel de fin de course S1, S2 afin de détecter un franchissement F1, F2 dudit seuil virtuel de fin de course S1, S2 par ledit organe actionneur 2.

On notera que, pour la mise en oeuvre de l'invention, les première et seconde positions P1, P2, la position instantanée Pt de l'organe actionneur 2, ainsi que le ou les seuils virtuels de fin de course S1, S2 pourront être définis indifféremment par tout paramètre représentatif de la position de l'organe actionneur 2 (et, plus globalement, représentatif de la configuration de braquage du dispositif de direction 5 et de ses roues directrices 3, 4), et notamment, de manière équivalente, par toute mesure ou évaluation de la position angulaire absolue du volant de conduite 6 (« angle volant »), de la position angulaire absolue de la colonne de direction 7, ou, le cas échéant, de la position angulaire absolue de l'arbre du moteur électrique d'assistance (le rapport de réduction, fixe, étant connu).

Ainsi, en particulier, la position instantanée Pt de la crémaillère 2 pourra être déterminée à partir d'un capteur de la position angulaire absolue du volant 6, ou d'un capteur de position relative de l'arbre du moteur d'assistance 1 complété par un algorithme d'étalonnage basé sur la détection des positions de mise en butée réelle de la crémaillère (c'est-à-dire opérant un recalage à partir des limites matérielles de course).

Si l'on détecte, lors de l'étape (b) d'évaluation de position, que l'organe actionneur 2 a franchi le seuil virtuel de fin de course S1, S2 dans un sens de franchissement F1, F2 prédéterminé, alors le procédé comprend une étape (c) de simulation de butée de fin de course au cours de laquelle on inclut dans la consigne d'assistance Ctot une consigne de résistance *Couple$_{Butée}$* qui simule l'effet d'une butée 13 mécanique en s'opposant à la progression, dans le sens de franchissement F1, F2 considéré, de l'organe actionneur 2 au-delà du seuil virtuel de fin de course S1, S2.

Avantageusement, tel que cela a été dit plus haut, l'invention permet ainsi d'utiliser le pilotage actif du moteur d'assistance 1 (c'est-à-dire d'alimenter ledit moteur 1 en énergie motrice, notamment électrique) pour créer artificiellement une ou des butées 13 virtuelles, distinctes des butées mécaniques réelles du dispositif de direction 5, afin de préserver ledit dispositif de direction 5 des chocs liés aux mises en butée d'origine mécanique.

En d'autres termes, l'invention peut offrir aux organes mécaniques du dispositif de direction 5 une protection logicielle (et/ou électronique) contre les effets néfastes d'une mise en butée réelle desdits organes mécaniques, protection qui se traduit par un bornage virtuel de la course autorisée desdits organes mécaniques, et plus particulièrement de l'organe actionneur 2.

Avantageusement, tel que cela est illustré sur la figure 1, la fixation de seuils virtuels de fin de course S1, S2 permet de définir, le long de la course fonctionnelle LO de l'organe actionneur 2 (correspondant à la distance d(P1,P2) qui sépare les première et seconde positions P1 et P2), d'une part au moins un domaine d'assistance normale (« *DAN* »), plus restreint que ladite course fonctionnelle L0, et dans lequel les lois d'assistance 11, et par conséquent la première consigne C1, s'appliquent seules, de manière exclusive, et d'autre part au moins un domaine (voire de préférence deux, qui bordent le domaine d'assistance à gauche et à droite) d'assistance réduite (« *DAR* »), dans lequel la première consigne C1 est atténuée, voire annulée et remplacée, par la consigne de résistance *Couple$_{Butée}$*.

De préférence, les domaines d'assistance réduite DAR peuvent ainsi faire office de zones-tampons, entre le domaine d'assistance normale DAN et les positions (extrémales) P1, P2 des butées mécaniques de fin de course de l'organe actionneur 2, afin de ralentir voire bloquer en douceur, grâce à l'opposition du moteur d'assistance 1, la progression de l'organe actionneur 2 avant que ce dernier n'atteigne effectivement sa position de mise en butée mécanique P1, P2.

Avantageusement, les butées virtuelles, fixées par les seuils virtuels S1, S2, précèdent les butées réelles qui limitent matériellement, par construction, le débattement de l'organe actionneur 2.

On peut ainsi protéger le dispositif de direction 5 en générant, à l'approche de la fin de course réelle de l'organe actionneur 2, de manière anticipée, c'est-à-dire avant l'apparition d'un contact réel, et a *fortiori* avant tout choc et/ou toute apparition de contraintes sévères (compression, flambage) liées à une mise en butée réelle forcée de l'organe actionneur 2, un freinage progressif du mouvement dudit organe actionneur 2.

Plus particulièrement, on peut définir les seuils virtuels S1, S2 de telle manière que le mouvement de braquage en direction de la première position extrémale P1, respectivement de la seconde position extrémale P2, soit stoppé par les butées virtuelles pour s'achever nécessairement à distance de la position extrémale P1, P2 considérée.

Les butées virtuelles pourront ainsi être utilisées comme des barrières de protection empêchant l'organe actionneur 2 d'atteindre ses limites de course matérielles P1, P2.

La distance d'éloignement de chaque seuil virtuel S1, S2 par rapport à la position extrémale P1, P2 qui lui est la plus proche contribuera alors avantageusement à définir la marge de sécurité $\Delta\theta_1$, $\Delta\theta_2$ disponible.

Avantageusement, l'activation d'une butée virtuelle, notamment à l'approche des positions extrémales P1, P2, permet en outre de renvoyer simultanément au conducteur, à travers le volant 6, une sensation (tactile) de résistance qui est perçue intuitivement comme une mise en butée naturelle.

La conduite du véhicule ainsi équipé d'une direction 5 protégée par l'utilisation de butées virtuelles antichoc sera donc en tous points similaire à celle d'un véhicule classique.

A ce titre, l'agrément de conduite pourra même être amélioré, les butées virtuelles pouvant être programmées pour présenter un comportement plus progressif, moins heurté, que les butées mécaniques usuelles.

On notera par ailleurs que la commutation, au niveau des seuils virtuels de fin de course S1, S2, entre le mode d'assistance normale et le mode d'assistance réduite (ou inversement), c'est-à-dire l'activation, ou inversement la désactivation de l'étape (c) de simulation de butée, dépend du sens de franchissement F1, F2 dudit seuil virtuel, sens de franchissement qui peut par exemple être donné par le signe de la vitesse de déplacement $\dot{X}_{Rack}$ de l'organe actionneur 2, au moment où ce dernier atteint ledit seuil S1, S2.

Au cours de l'étape (b) d'évaluation de position selon le procédé, on pourra donc surveiller d'une part la position instantanée Pt de l'organe d'assistance 2 (afin de la comparer avec le seuil de fin de course virtuel S1, S2), et plus particulièrement en déduire le signe du dépassement de position par rapport au seuil virtuel : $\dot{X}_{Rack}$ = Pt - Si avec i = 1 ou 2, et d'autre part le signe de la vitesse de déplacement $\dot{X}_{Rack}$ de l'organe actionneur 2, afin d'activer la butée virtuelle 13 lorsque les deux signes (celui du dépassement et celui de la vitesse) sont identiques, et de désactiver ladite butée virtuelle 13 lorsque lesdits signes sont différents.

Ainsi, lorsque l'on atteint et franchit la frontière marquée par le seuil virtuel de fin de course pour quitter le domaine d'assistance normale DAN et entrer dans le domaine d'assistance réduite DAR, c'est-à-dire lorsque l'on poursuit (ou tente de poursuivre) l'accentuation de l'angle de braquage au-delà du seuil S1, S2 en direction de la limite de fin de course P1, P2 correspondante, la simulation de butée est enclenchée de sorte à opposer activement à cette progression, grâce au moteur 1, un effort résistant $Effort_{Butée}$, qui est de nature à ralentir, voire bloquer le mouvement de l'organe actionneur 2, et plus globalement de la direction 5, ou même de nature à rappeler ledit organe actionneur 2 vers le seuil virtuel de fin de course S1, S2, comme si l'organe actionneur 2 avait en pratique rencontré une butée mécanique présentant les caractéristiques de la butée virtuelle 13.

De préférence, l'effort résistant $Effort_{Butée}$ augmente avec le dépassement du seuil S1, S2.

A titre d'exemple, en référence à la figure 1, si le conducteur tourne le volant de droite à gauche, notamment en provenance de la position centrale P0, et franchit le seuil virtuel gauche S1 dans le sens de franchissement droite-gauche F1, de telle sorte que la crémaillère 2 se rapproche de sa limite gauche P1 de fin de course, alors l'enclenchement de la butée virtuelle 13 aura pour effet l'apparition d'un effort de résistance $Effort_{Butée}$, de préférence progressivement croissant, orienté globalement de gauche à droite (dans le sens opposé à F1), qui s'oppose à la poursuite de la rotation à gauche du volant 6, au-delà dudit seuil S1.

Il en ira de manière similaire, *mutatis mutandis*, pour ce qui est d'un braquage à droite dépassant le seuil virtuel droit S2 dans le sens de franchissement gauche-droite F2.

A l'inverse, le retour dans le domaine d'assistance normale DAN, en-deçà du seuil virtuel S1, S2 de fin de course, aura pour effet de faire sortir la direction 5 du domaine d'assistance réduite DAR, et par conséquent de désactiver la butée virtuelle 13, au profit des lois d'assistance normale 11 (qui peuvent notamment privilégier une simple amplification du couple $\tau_v$ exercé par le conducteur sur le volant 6).

L'activation de la butée virtuelle 13 pourra se traduire par l'ajout (algébrique) à la première consigne C1 d'une consigne de résistance $Couple_{Butée}$, de signe opposé à celui du couple volant $\tau_v$ qui tend à accentuer le braquage, ou même par la mise à zéro de la première consigne C1, c'est-à-dire la suppression de l'assistance normale, et son remplacement pur et simple par la consigne de résistance $Couple_{Butée}$.

La consigne de résistance $Couple_{Butée}$ sera de préférence exprimée sous forme d'un couple, ledit couple étant celui que doit développer le moteur d'assistance 1 pour simuler l'application d'un effort résistant $Effort_{Butée}$ équivalent à celui qui serait exercé par la butée virtuelle 13, telle qu'elle est configurée, à l'encontre de l'organe actionneur 2.

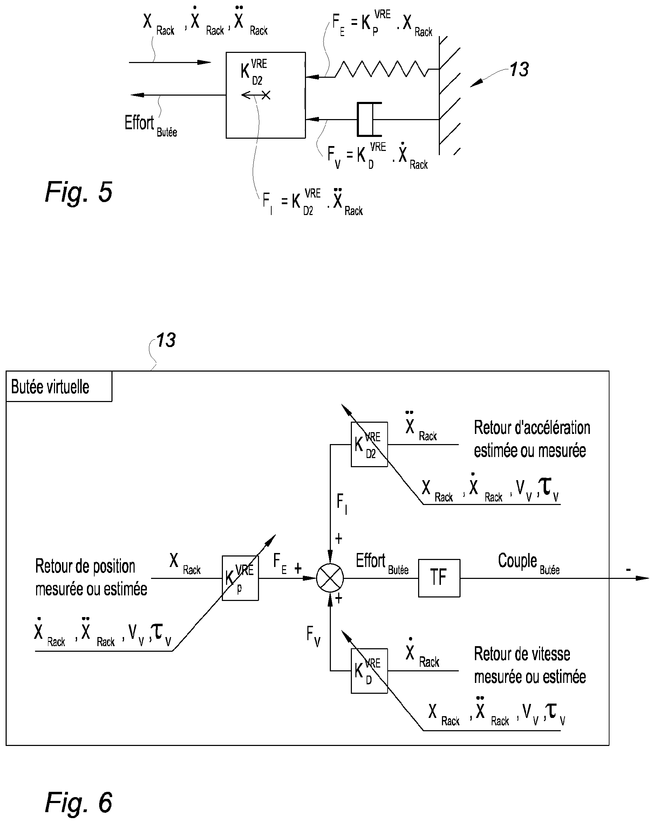

Sur les figures 4 et 6, on notera *TF* la fonction de transfert, ici homogène à un bras de levier, permettant de convertir ledit effort de résistance $Effort_{Butée}$ au couple formant ladite consigne de résistance $Couple_{Butée}$.

Si le moteur d'assistance 1 est un moteur électrique, la consigne de résistance pourra être représentative de l'intensité du courant d'alimentation dudit moteur qui correspondra au couple souhaité.

En tout état de cause, tel que cela est illustré sur les figures 3 à 6, la consigne de résistance $Couple_{Butée}$, et plus particulièrement la résultante de l'effort résistant $Effort_{Butée}$ qui lui correspond et qui s'oppose au déplacement de l'organe actionneur 2, comprend de préférence au moins une composante élastique $F_E = K_P^{VRE} \cdot X_{Rack}$, simulant un effet de ressort, ladite composante élastique $F_E$ étant proportionnelle, selon un coefficient de raideur $K_P^{VRE}$ prédéterminé, à l'amplitude du déplacement $X_{Rack}$ de l'organe actionneur 2 au-delà du seuil virtuel de fin de course S1, S2 (c'est-à-dire au dépassement dudit seuil).

Cette première composante, modélisée par un premier gain proportionnel (le coefficient de raideur) $K_P^{VRE}$ qui est assimilable à la raideur d'un ressort et qui est appliqué au dépassement de position $X_{Rack}$, engendrera une contrainte de rappel élastique qui oppose une résistance croissante à l'enfoncement de la butée virtuelle, résistance en l'espèce proportionnelle au braquage qui entraîne l'organe actionneur 2 au-delà du seuil virtuel S1, S2 considéré.

Par simple commodité de description, on considérera ici que le dépassement $X_{Rack}$ correspond à un déplacement linéaire rectiligne en translation de la crémaillère 2 dans le carter de direction, selon la direction longitudinale de coulissement de ladite crémaillère, qui est en principe transverse à la direction de marche avant-arrière du véhicule.

Comme indiqué plus haut, la position instantanée Pt, et donc l'amplitude de déplacement $X_{Rack}$ de l'organe actionneur 2 au-delà du seuil virtuel de fin de course S1, S2, pourra notamment être évaluée à partir de la position angulaire absolue du volant 6, le rapport de réduction entre le pignon 8 et la crémaillère 2 étant connu, ou bien à partir de la position angulaire de l'arbre du moteur d'assistance 1, le rapport de réduction du réducteur à roue tangente et vis sans fin étant connu, ou bien encore par tout autre système ou capteur approprié.

De préférence, selon une caractéristique qui peut être alternative ou complémentaire à la précédente concernant la présence d'une composante élastique $F_E$, et tel que cela apparaît sur les figures 3 à 6, la consigne de résistance $Couple_{Butée}$, et plus particulièrement la résultante de l'effort résistant $Effort_{Butée}$ qui lui correspond et qui s'oppose au déplacement de l'organe actionneur 2, comprend au moins une composante visqueuse $F_V = K_D^{VRE} \cdot \dot{X}_{Rack}$, simulant un effet d'amortisseur, ladite composante visqueuse $F_v$ étant proportionnelle, selon un coefficient de viscosité $K_D^{VRE}$ prédéterminé, à la vitesse de déplacement $\dot{X}_{Rack}$ de l'organe actionneur.

Ici encore, on considérera, par commodité de description, et pour l'application du coefficient de viscosité $K_D^{VRE}$ sous forme d'un second gain, la vitesse linéaire $\dot{X}_{Rack}$ correspondant au mouvement en translation de la crémaillère 2 dans le carter de direction, c'est-à-dire la dérivée première par rapport au temps de la position instantanée Pt (ou, de manière équivalente, du dépassement $X_{Rack}$).

Cette vitesse de déplacement $\dot{X}_{Rack}$ pourra par exemple être évaluée à partir d'une mesure de la vitesse angulaire du volant de conduite 6, le rapport de réduction entre le pignon 8 et la crémaillère 2 étant connu, ou bien à partir de la vitesse angulaire de l'arbre du moteur d'assistance 1, le rapport de réduction du réducteur à roue tangente et vis sans fin étant connu, ou encore par tout autre système ou capteur approprié.

De préférence, selon une caractéristique qui peut être alternative ou complémentaire à l'une et/ou l'autre des précédentes, qui concernent la présence d'une composante élastique $F_E$ et/ou d'une composante visqueuses $F_v$, la consigne de résistance $Couple_{Butée}$, et plus particulièrement la résultante de l'effort résistant $Effort_{Butée}$ qui lui correspond et qui s'oppose au déplacement de l'organe actionneur 2, comprend au moins une composante inertielle

$F_I = K_{D2}^{VRE} \cdot \ddot{X}_{Rack}$, simulant un effet de masse mobile, ladite composante inertielle $F_I$ étant proportionnelle, selon

un coefficient d'inertie $K_{D2}^{VRE}$ prédéterminé, à l'accélération $\ddot{X}_{Rack}$ de l'organe actionneur 2.

Ici encore, on considérera, pour l'application de ce troisième gain $K_{D2}^{VRE}$ (coefficient d'inertie, représentatif d'une masse), l'accélération $\ddot{X}_{Rack}$ linéaire correspondant au mouvement en translation de la crémaillère 2 dans le carter de direction, c'est-à-dire la dérivée seconde par rapport au temps de la position instantanée Pt (ou, de manière équivalente, du dépassement $X_{Rack}$).

Ladite accélération $\ddot{X}_{Rack}$ pourra être évaluée à partir d'un calcul de dérivée de la vitesse, ou de dérivées successives de la position de l'organe actionneur 2, ou bien encore à partir de l'accélération angulaire du volant 6 ou de l'arbre du moteur d'assistance 1, les éventuels coefficients de réduction étant connus.

Selon une variante de réalisation possible, correspondant aux figures 3 et 4, la consigne de résistance $Couple_{Butée}$, et plus particulièrement la résultante de l'effort résistant $Effort_{Butée}$ qui lui correspond et qui s'oppose au déplacement de l'organe actionneur 2, est obtenue par une expression du premier ordre simulant une butée 13 ressort-amortisseur et comprenant à cet effet une composante élastique $F_E$ et une composante visqueuse $F_v$.

Plus particulièrement, en référence à la figure 4, ladite expression s'écrira ($\underline{s}$ étant la variable utilisée par les transformées de Laplace) :

$$Couple_{Butée} = -TF * K_P^{VRE} * X_{Rack} * \left( \frac{K_D^{VRE}}{K_P^{VRE}} . s + 1 \right)$$

Le cas échéant, le comportement, notamment dynamique, de la butée 13 pourra ainsi être modélisé exclusivement avec ces deux composantes élastique et visqueuse, correspondant à un mécanisme virtuel de butée comprenant un ressort de raideur $K_P^{VRE}$ monté en parallèle avec un amortisseur linéaire de viscosité $K_D^{VRE}$, lesdites deux composantes définissant ainsi un système du premier ordre par rapport à la position en dépassement de seuil $X_{Rack}$ de l'organe actionneur 2.

On pourra avantageusement choisir ou modifier les propriétés d'une telle butée virtuelle ressort-amortisseur par une sélection appropriée des coefficients de raideur $K_P^{VRE}$ et de viscosité $K_D^{VRE}$ (ce qui revient à adapter l'impédance de la butée virtuelle), en particulier en utilisant les formules suivantes :

$$\tau_{Butée} \approx \frac{K_D^{VRE}}{K_P^{VRE}}$$ la constante de temps de la butée virtuelle ressort-amortisseur,

$$\omega_{Butée} = 1 \Big/ \tau_{Butée} = \frac{K_P^{VRE}}{K_D^{VRE}}$$ le mode propre de ladite butée ressort-amortisseur, et

$$F_{Butée} = \frac{\omega_{Butée}}{2*\pi}$$ la fréquence propre de ladite butée virtuelle ressort-amortisseur.

Selon une autre variante de réalisation possible, correspondant aux figures 5 et 6, la consigne de résistance $Couple_{Butée}$, et plus particulièrement la résultante de l'effort résistant $Effort_{Butée}$ qui lui correspond et qui s'oppose au déplacement de l'organe actionneur 2, est obtenue par une expression du second ordre simulant une butée 13 masse-ressort-amortisseur et comprenant à cet effet une composante élastique $F_E$, une composante visqueuse $F_V$, et une composante inertielle $F_I$.

Plus particulièrement, en référence à la figure 6, ladite expression s'écrira :

$$Couple_{Butée} = -TF * K_P^{VRE} * X_{Rack} * \left( \frac{K_{D2}^{VRE}}{K_P^{VRE}}.s^2 + \frac{K_D^{VRE}}{K_P^{VRE}}.s + 1 \right)$$

Avantageusement, un tel modèle du second ordre, qui fait intervenir les dérivées première et seconde de la position en dépassement de seuil $X_{Rack}$ de l'organe actionneur 2, est plus complet que le précédent, du premier ordre, et permet d'obtenir un rendu plus fidèle de l'entrée en butée virtuelle, assurant un meilleur ressenti de la conduite, plus naturel et plus intuitif pour le conducteur.

En outre, on peut facilement régler le comportement dynamique d'une telle butée virtuelle, et notamment l'effet de rebond, plus ou moins amorti, qu'elle procure à la direction 5.

On pourra en effet avantageusement choisir ou modifier les propriétés d'une telle butée virtuelle 13 masse-ressort-amortisseur, dont le mécanisme simulé diffère de celui représenté sur la figure 3 par l'ajout d'une masse $K_{D2}^{VRE}$ inertielle portée par le mécanisme ressort-amortisseur, en opérant une sélection appropriée des coefficients de raideur $K_P^{VRE}$, de viscosité $K_D^{VRE}$ et d'inertie $K_{D2}^{VRE}$, et plus particulièrement en utilisant les formules approchées suivantes :

$$\omega_{Butée} \approx \sqrt{\frac{K_{D2}^{VRE}}{K_P^{VRE}}}$$ le mode propre de la butée virtuelle masse-ressort-amortisseur,

$$F_{Butée} = \frac{\omega_{Butée}}{2*\pi}$$ la fréquence propre de ladite butée virtuelle masse-ressort-amortisseur, et

$$\xi_{Butée} \approx \frac{K_D^{VRE}}{2}.\sqrt{\frac{K_{D2}^{VRE}}{K_P^{VRE}}}$$ l'amortissement réduit.

Selon une variante possible de réalisation, les valeurs du ou des seuils virtuels de fin de course S1, S2, pourront être fixées de manière à rester constantes, quelle que soit la situation de vie du véhicule.

Toutefois, selon une variante de réalisation, le ou les seuils virtuels de fin de course et/ou, préférentiellement, les coefficients de raideur $K_P^{VRE}$, de viscosité $K_D^{VRE}$ et d'inertie $K_{D2}^{VRE}$, seront modifiés en fonction d'au moins un paramètre parmi : la vitesse de déplacement $V_V$ du véhicule sur lequel est installé le moteur d'assistance de direction 1, le couple $\tau_V$ exercé par le conducteur sur un volant de conduite 6 qui commande le déplacement de l'organe actionneur 2, la position (instantanée Pt, respectivement en dépassement $X_{Rack}$), la vitesse $\dot{X}_{Rack}$ ou l'accélération $\ddot{X}_{Rack}$ de l'organe actionneur 2.

En d'autres termes, il sera possible d'adapter, en fonction de la situation de vie du véhicule, la stratégie de mise en oeuvre des butées virtuelles 13, et notamment les conditions d'activation desdites butées virtuelles 13 et/ou l'impédance desdites butées virtuelles 13, dont dépendra notamment l'ampleur de l'action de ces dernières (l'intensité de l'effort résistant fourni par lesdites butées).

A cet effet, on pourra avantageusement stocker dans une mémoire non volatile du calculateur 12 des abaques (ou « tables de gains ») fixant les valeurs de seuils S1, S2 ou de coefficients de raideur, de viscosité ou d'inertie en fonction du ou des paramètres considérés.

A titre d'exemple, on pourra, lorsque le véhicule circule à grande vitesse, au-delà d'un seuil de vitesse haute prédéterminé, d'une part rapprocher les seuils virtuels S1 et S2 de la position centrale P0, de sorte à étendre les domaine d'assistance réduite DAR, et d'autre part "étaler" la prise en charge de la butée virtuelle 13 de manière très progressive sur ces domaines d'assistance réduite, par exemple en augmentant l'amortissement de ladite butée, et ce afin d'éviter ou de modérer les forts coups de volant susceptibles d'entraîner une embardée du véhicule.

A l'inverse, à petite vitesse (en-deçà d'un seuil de vitesse basse prédéterminé), et afin de faciliter les manoeuvres d'accès au stationnement ou de dégagement, on pourra opter pour des seuils virtuels S1, S2 plus éloignés de la position centrale P0, de sorte à raccourcir les domaines d'assistance réduite DAR au profit d'un élargissement du domaine central d'assistance normale DAN (ce qui permettra de bénéficier d'une amplitude de braquage disponible la plus étendue possible pendant la manoeuvre), et opter pour une butée 13 plus dure et/ou moins amortie.

Selon une autre possibilité, qui peut constituer une invention à part entière, les seuils virtuels de fin de course S1, S2, et par conséquent l'étendue du domaine d'assistance normale DAN disponible pour la manoeuvre de l'organe actionneur 2, pourront être modifiés en fonction de la dimension, et notamment de la largeur, des pneumatiques utilisés.

Plus particulièrement, les seuils virtuels S1, S2 pourront être rapprochés de la position centrale P0 lorsque la largeur de pneumatiques augmente, de manière à ce que la mise en butée virtuelle intervienne avant, et empêche, l'entrée en contact du flanc du pneumatique avec la carrosserie ou un organe de la direction 5.

Selon une variante possible de réalisation, fournie à titre indicatif et applicable aux différentes situations envisagées dans ce qui précède, le déplacement de l'organe actionneur 2 étant commandé par un volant de conduite 6, le seuil virtuel de fin de course S1, S2 précède de 30 degrés à 60 degrés, et de préférence d'environ 50 degrés, la position angulaire extrémale de braquage dudit volant 6 qui correspond à la limite mécanique de déplacement, ici P1, P2, de l'organe actionneur 2 dans le sens de braquage considéré.

En d'autres termes, tel que cela est illustré sur la figure 1, la simulation de butée virtuelle 13 est de préférence conçue pour s'activer à partir d'un seuil de déclenchement qui précède la butée réelle P1, P2 d'une marge de sécurité $\Delta\theta_1$, $\Delta\theta_2$ comprise entre 30 degrés et 60 degrés (dans le sens de franchissement F1, F2 considéré).

A titre indicatif (ou alternatif), cette marge de sécurité $\Delta\theta_1$, $\Delta\theta_2$ peut représenter de 10 % à 20 % de la course angulaire totale du volant 6, qui correspond elle-même à la course fonctionnelle L0 réelle de l'organe actionneur 2.

En durcissant artificiellement le mouvement de l'organe actionneur 2, et/ou, de manière équivalente, la rotation du volant 6, en amont des première et seconde positions P1, P2 de mise en butée réelle de l'organe actionneur 2, mais uniquement à compter des seuils virtuels S1, S2 relativement proches de ces positions, on peut protéger efficacement la direction des chocs, sans pour autant gêner la conduite.

Par ailleurs, selon une variante possible de mise en oeuvre qui peut constituer une invention à part entière, le procédé peut être utilisé comme un procédé antivol, en paramétrant le ou les seuils virtuels de fin de course S1, S2 de sorte à utiliser le moteur d'assistance 1 pour bloquer le déplacement de l'organe actionneur 2 de direction dans une position invariante, ou restreindre ledit déplacement en-deçà d'une plage de bridage prédéterminée, inférieure à 50 %, à 30 % voire à 10 % de la plage de déplacement correspondant à la course fonctionnelle L0 normale dudit organe actionneur.

En d'autres termes, selon une application qui constitue une invention à part entière, on peut utiliser le moteur d'assistance de direction 1 comme antivol actif, en fournissant audit moteur 1 une consigne de résistance telle qu'elle immobilise ou bride la direction 5 dans une plage trop restreinte pour permettre les changements de direction nécessaire à la conduite du véhicule.

A cet effet, on pourra avantageusement rapprocher les deux seuils virtuels gauche et droite S1, S2 l'un de l'autre, à proximité (de part et d'autre) de la position instantanée Pt (quelconque) dans laquelle se trouve l'organe actionneur (respectivement le volant 6) lors de l'arrêt et de la condamnation précédente du véhicule, voire faire coïncider ces deux seuils gauche S1 et droite S2 avec ladite position Pt.

On obtiendra ainsi une butée 13 virtuelle de verrouillage bidirectionnelle, c'est-à-dire s'opposant aussi bien au braquage à gauche F1 qu'au braquage à droite F2 depuis la position instantanée Pt occupée par la direction 5 ainsi bloquée.

Bien entendu, le réglage « antivol » de la butée 13 correspondra de préférence à des valeurs élevées des coefficients de raideur $K_P^{VRE}$, de viscosité $K_D^{VRE}$ et/ou d'inertie $K_{D2}^{VRE}$, strictement supérieures à celles utilisées pour les butées virtuelles mises en oeuvre lors de la conduite normale (lorsque la direction est déverrouillée, l'antivol étant désactivé).

Ainsi, on opposera à toute manoeuvre non autorisée de la direction 5 des butées virtuelles 13 antivol particulièrement dures, et ce même en l'absence d'entrave mécanique matérielle de ladite direction 5.

Selon une variante possible de mise en oeuvre, qui peut constituer une application individuelle ou être complémentaire à l'une ou l'autre des utilisations décrites dans ce qui précède, le procédé peut être utilisé comme procédé de réglage de la symétrie d'un train roulant de véhicule comportant au moins un organe effecteur 3, 4 formé par une roue directrice.

En pareil cas, on fixe au cours dudit procédé un premier seuil virtuel de fin de course gauche S1 et un second seuil virtuel de fin de course droit S2 de telle sorte que le premier seuil virtuel de fin de course S1 et le second seuil virtuel de fin de course S2 se situent à équidistance de part et d'autre d'une position centrale P0 médiane qui correspond à une absence de braquage de la ou des roues directrices 3, 4 du train roulant.

Avantageusement, dans l'hypothèse où le mécanisme de direction 5 est matériellement imparfait, de telle sorte que la limite de braquage gauche P1 n'est pas l'exact symétrique de la limite de braquage à droite P2 par rapport à la position centrale P0 dans laquelle les roues 3, 4 sont droites, c'est-à-dire en pratique de telle sorte que la course disponible d(P0,P1) pour braquer à gauche diffère de la course disponible d(P0,P2) pour braquer à droite, le procédé permettra en effet, de rétablir artificiellement, virtuellement, la symétrie du train roulant, et plus particulièrement de la commande de direction, en plaçant les seuils virtuels de fin de course S1, S2 de manière exactement symétrique à gauche et à droite de la position centrale P0, qui coïncidera de fait avec la position médiane de la course d(S1, S2) restant disponible entre lesdites butées virtuelles (c'est-à-dire avec le milieu du domaine d'assistance normale DAN), de telle sorte que l'on aura des courses disponibles résultantes qui sont égales à gauche et à droite de ladite position centrale P0 : d(P0,S1) = d(P0,S2) = ½d(S1, S2).

Un algorithme de gestion virtuelle pourra ainsi compenser les tolérances matérielles laissant subsister une excentration mécanique de la direction 5.

Bien entendu l'invention concerne également en tant que tel un programme informatique contenant des éléments de code permettant la mise en oeuvre d'un procédé conforme à l'invention lorsque ledit programme est lu par un calculateur 12, ainsi qu'un support de données contenant un tel programme informatique.

Elle concerne de même un module d'assistance de direction comprenant un calculateur 12 (tel qu'un ordinateur de bord, automate, etc.) programmé pour mettre en oeuvre un tel procédé, ainsi qu'un véhicule, et notamment un véhicule terrestre à roues motrices et à roues directrices équipé d'un tel module d'assistance de direction.

Bien entendu, l'invention n'est nullement limitée aux seules variantes de réalisation décrites, l'homme du métier étant notamment à même d'isoler ou de combiner librement entre elles l'une ou l'autre des caractéristiques mentionnées dans ce qui précède, ou de leur substituer des équivalents.

Glossaire récapitulatif :

$X_{Rack}$= *Pt-Si* position en dépassement (amplitude de déplacement par rapport au seuil Si, avec i = 1 ou 2 considéré), mesurée ou estimée, de la crémaillère 2 (organe actionneur).

$\dot{X}_{Rack}$ = vitesse mesurée ou estimée, de la crémaillère 2 (organe actionneur).

$\ddot{X}_{Rack}$ = accélération estimée, de la crémaillère 2 (organe actionneur).

$V_v$ = vitesse de déplacement du véhicule.

$\tau_v$ = couple exercé par le conducteur sur le volant de conduite 6

*Couple*$_{Butée}$ =consigne de résistance calculée, correspondant au couple résistant que doit exercer le moteur d'assistance 1 pour simuler l'effort de résistance effet de la butée virtuelle 13.

*Effort*$_{Butée}$ = effort de résistance calculé, correspondant à l'effet de résistance au déplacement procuré par la butée virtuelle 13.

$TF$ = fonction de transfert (rapport de réduction homogène à un bras de levier) permettant de convertir l'effort de résistance calculé en couple (consigne) de résistance correspondant.

$K_P^{VRE}$ = coefficient de raideur (ressort) de la butée virtuelle 13.

$K_D^{VRE}$ = coefficient de viscosité (amortisseur) de la butée virtuelle 13.

$K_{D2}^{VRE}$ = coefficient d'inertie (masse) de la butée virtuelle 13.

$s$ = variable (complexe) utilisée par les transformées de Laplace.

**Revendications**

1. Procédé de gestion d'un moteur d'assistance (1) de direction (5), au cours duquel on élabore une consigne d'assistance (Ctot) destinée à être appliquée à un moteur d'assistance (1) conçu pour fournir un effort (*Effort assistance*) d'assistance à la manoeuvre d'un organe actionneur (2) de direction, du genre crémaillère, ledit organe actionneur (2) étant monté mobile au moins entre une première position (P1) et une seconde position (P2), distinctes l'une de l'autre, qui délimitent une course fonctionnelle (L0) dudit organe actionneur permettant à ce dernier de modifier l'angle d'orientation d'un organe effecteur (3, 4) de direction, du genre roue directrice, ledit procédé étant **caractérisé en ce qu'**il comporte :

    une étape (a) de définition d'un seuil virtuel de fin de course, au cours duquel on choisit au moins un seuil virtuel de fin de course (S1, S2) qui correspond à une position d'engagement fictif de l'organe actionneur (2) contre une butée (13) virtuelle, position d'engagement fictif qui est strictement comprise entre la première position (P1) et la seconde position (P2),
    une étape (b) d'évaluation de position, au cours de laquelle on évalue la position instantanée (Pt) de l'organe actionneur (2) et on la compare avec le seuil virtuel de fin de course (S1, S2) afin de détecter un franchissement (F1, F2) dudit seuil virtuel de fin de course par ledit organe actionneur, et, si l'on détecte que l'organe actionneur (2) a franchi ledit seuil virtuel de fin de course (S1, S2) dans un sens de franchissement prédéterminé,
    une étape (c) de simulation de butée de fin de course au cours de laquelle on inclut dans la consigne d'assistance (Ctot) une consigne de résistance (*Couple$_{Butée}$*) qui simule l'effet d'une butée (13) mécanique en s'opposant à la progression, dans le sens de franchissement (F1, F2) considéré, de l'organe actionneur (2) au-delà du seuil virtuel de fin de course (S1, S2),
    et **en ce que** la consigne de résistance (*Couple$_{Butée}$*) est obtenue

        - par une expression du premier ordre simulant une butée (13) ressort-amortisseur et qui comprend à cet effet une composante élastique ( $F_E = K_P^{VRE} \cdot X_{Rack}$ ), simulant un effet de ressort, qui est proportionnelle, selon un coefficient de raideur ( $K_P^{VRE}$ ) prédéterminé, à l'amplitude du déplacement ($X_{Rack}$) de l'organe actionneur (2) au-delà du seuil virtuel de fin de course (S1, S2) et une composante visqueuse ( $F_V = K_D^{VRE} \cdot \dot{X}_{Rack}$ ), simulant un-effet d'amortisseur, qui est proportionnelle, selon un coefficient de viscosité ( $K_D^{VRE}$ ) prédéterminé, à la vitesse de déplacement ($\dot{X}_{Rack}$) de l'organe actionneur (2),
        - ou par une expression du second ordre simulant une butée (13) masse-ressort-amortisseur et qui comprend à cet effet une composante élastique (F$_E$), une composante visqueuse (F$_V$), et une composante inertielle ( $F_I = K_{D2}^{VRE} \cdot \ddot{X}_{Rack}$ ), simulant un effet de masse mobile, qui est proportionnelle, selon un coefficient d'inertie ( $K_{D2}^{VRE}$ ) prédéterminé, à l'accélération ($\ddot{X}_{Rack}$) de l'organe actionneur (2).

2. Procédé selon la revendication 1 **caractérisé en ce que** le ou les seuils virtuels de fin de course (S1, S2) et/ou les coefficients de raideur ( $K_P^{VRE}$ ), de viscosité ( $K_D^{VRE}$ ) et d'inertie ( $K_{D2}^{VRE}$ ) sont modifiés en fonction d'au moins un paramètre parmi : la vitesse de déplacement (V$_V$) du véhicule sur lequel est installé le moteur d'assistance de direction, le couple ($\tau_v$) exercé par le conducteur sur un volant de conduite (6) qui commande le déplacement de l'organe actionneur (2), la position (Pt, $X_{Rack}$), la vitesse ($\dot{X}_{Rack}$) ou l'accélération ($\ddot{X}_{Rack}$) de l'organe actionneur (2).

3. Procédé selon la revendication 2 **caractérisé en ce que,** lorsque le véhicule circule au-delà d'un seuil de vitesse haute prédéterminé, on augmente l'amortissement de la butée virtuelle (3).

4. Procédé selon l'une des revendications précédentes **caractérisé en ce que,** le déplacement de l'organe actionneur (2) étant commandé par un volant de conduite (6), le seuil virtuel de fin de course (S1, S2) précède de 30 degrés à 60 degrés, et de préférence d'environ 50 degrés, la position angulaire extrémale de braquage dudit volant (6) qui correspond à la limite mécanique de déplacement (P1, P2) de l'organe actionneur (2) dans le sens de braquage considéré.

5. Procédé selon l'une des revendications précédentes **caractérisé en ce qu'**il est utilisé comme un procédé antivol en paramétrant le ou les seuils virtuels de fin de course (S1, S2) de sorte à utiliser le moteur d'assistance (1) pour bloquer le déplacement de l'organe actionneur (2) de direction dans une position invariante, ou restreindre ledit déplacement en-deçà d'une plage de bridage prédéterminée, inférieure à 50 %, à 30 % voire à 10 % de la plage de déplacement correspondant à la course fonctionnelle (L0) normale dudit organe actionneur (2).

6. Procédé selon la revendication 5 **caractérisé en ce que** le réglage antivol de la butée virtuelle (13) correspond à des valeurs des coefficients de raideur ($K_P^{VRE}$), de viscosité ($K_D^{VRE}$) et/ou d'inertie ($K_{D2}^{VRE}$) strictement supérieures à celles utilisées pour les butées virtuelles (13) mises en oeuvre lors de la conduite normale.

7. Procédé selon l'une des revendications précédentes **caractérisé en ce qu'**il est utilisé comme procédé de réglage de la symétrie d'un train roulant de véhicule comportant au moins un organe effecteur (3, 4) formé par une roue directrice, au cours duquel on fixe un premier seuil virtuel de fin de course gauche (S1) et un second seuil virtuel de fin de course droit (S2) de telle sorte que le premier seuil virtuel de fin de course et le second seuil virtuel de fin de course se situent à équidistance de part et d'autre d'une position centrale (P0) médiane qui correspond à une absence de braquage de la ou des roues directrices (3, 4) du train roulant.


**Patentansprüche**

1. Verfahren zum Betreiben eines Unterstützungsmotors (1) einer Lenkung (5), im Laufe dessen man einen Unterstützungssollwert (Ctot) erarbeitet, der dazu bestimmt ist, auf einen Unterstützungsmotor (1) angewendet zu werden, der gestaltet ist, um eine Kraft (*Effort assistance*) zur Unterstützung bei der Betätigung eines Stellglieds (2) einer Lenkung, in der Art einer Zahnstange, bereitzustellen, wobei das besagte Stellglied (2) zumindest zwischen einer ersten Position (P1) und einer zweiten Position (P2), die sich voneinander unterscheiden, beweglich montiert ist, die einen funktionellen Weg (L0) des besagten Stellglieds eingrenzen, der es letzterem ermöglicht, den Orientierungswinkel eines Ausführungsglieds (3, 4) einer Lenkung, in der Art eines lenkbaren Rades, zu ändern, wobei das besagte Verfahren **dadurch gekennzeichnet ist, dass** es Folgendes umfasst:

einen Schritt (a) zum Definieren eines virtuellen Endlagengrenzwerts, im Laufe dessen man zumindest einen virtuellen Endlagengrenzwert (S1, S2) auswählt, der einer Position für ein fiktives Anlegen des Stellglieds (2) an einen virtuellen Anschlag (13) entspricht, wobei die Position für ein fiktives Anlegen strengstens zwischen der ersten Position (P1) und der zweiten Position (P2) enthalten ist,
einen Schritt (b) zur Positionsbewertung, im Laufe dessen man die momentane Position (Pt) des Stellglieds (2) bewertet und man diese mit dem virtuellen Endlagengrenzwert (S1, S2) vergleicht, um eine Überschreitung (F1, F2) des besagten virtuellen Endlagengrenzwerts durch das besagte Stellglied zu erfassen, und, wenn man erfasst, dass das Stellglied (2) den besagten virtuellen Endlagengrenzwert (S1, S2) in einer vorbestimmten Überschreitungsrichtung überschritten hat,
einen Schritt (c) zum Simulieren eines Endlagenanschlags, im Laufe dessen man in den Unterstützungssollwert (Ctot) einen Widerstandssollwert (*Couple_Butée*) einbezieht, der die Wirkung eines mechanischen Anschlags (13) simuliert, indem er sich dem Fortschritt des Stellglieds (2) über den virtuellen Endlagengrenzwert (S1, S2) hinaus in die angenommene Überschreitungsrichtung (F1, F2) entgegenstellt, um zu verhindern, dass das Stellglied seine Anschlagposition gegen reale Anschläge der Lenkung erreicht.
und dadurch, dass man den Widerstandssollwert (*Couple_Butée*) wie folgt erhält

- durch eine Gleichung erster Ordnung, die einen Feder-Dämpfer Anschlag (13) simuliert und die zu diesem Zweck eine elastische Komponente ( $F_E = K_P^{VRE} \cdot X_{Rack}$ ) umfasst, die eine Federwirkung simuliert, die entsprechend einem vorbestimmten Steifheitskoeffizienten ( $K_P^{VRE}$ ) proportional zur Bewegungsamplitude ($X_{Rack}$) des Stellglieds (2) über den virtuellen Endlagengrenzwert (S1, S2) hinaus ist, sowie eine viskose Komponente ($F_V = K_D^{VRE} \cdot \dot{X}_{Rack}$), die eine Dämpferwirkung simuliert, die entsprechend einem vorbestimmten Viskositätskoeffizienten ( $K_D^{VRE}$ ) proportional zur Bewegungsgeschwindigkeit ($\dot{X}_{Rack}$) des Stellglieds (2) ist,

- oder durch eine Gleichung zweiter Ordnung die einen Masse-Feder-Dämpfer Anschlag (13) simuliert, und die zu diesem Zweck eine elastische Komponente ($F_E$) , eine viskose Komponente ($F_V$) und eine Trägheitskomponente ( $F_I = K_{D2}^{VRE} \cdot \ddot{X}_{Rack}$ ) umfasst, die eine Wirkung einer beweglichen Masse simulieren, die entsprechend einem vorbestimmten Trägheitskoeffizienten ( $K_{D2}^{VRE}$ ) proportional zur Beschleunigung ($\ddot{X}_{Rack}$) des Stellglieds (2) ist.

2. Verfahren nach Anspruch 1, **dadurch gekennzeichnet, dass** der (die) virtuelle(n) Endlagengrenzwert(e) (S1, S2) und/ oder die Koeffizienten für Steifheit ( $K_P^{VRE}$ ), Viskosität ( $K_D^{VRE}$ ) und Trägheit ( $K_{D2}^{VRE}$ ) in Abhängigkeit zumindest eines der folgenden Parameter geändert wird: die Bewegungsgeschwindigkeit (Vv) des Fahrzeugs, in dem der Unterstützungsmotor einer Lenkung installiert ist, das Drehmoment ($T_V$), das durch den Lenker auf eine Lenkradsteuerung (6) ausgeübt wird, welche die Bewegung des Stellglieds (2) steuert, die Position (Pt, $X_{Rack}$), die Geschwindigkeit ($\dot{X}_{Rack}$) oder die Beschleunigung ($\ddot{X}_{Rack}$) des Stellglieds (2).

3. Verfahren nach Anspruch 2, **dadurch gekennzeichnet, dass**, wenn sich das Fahrzeug über einem vorbestimmten oberen Geschwindigkeitsgrenzwert fortbewegt, man die Dämpfung des virtuellen Anschlags (3) erhöht.

4. Verfahren nach einem der vorhergehenden Ansprüche, **dadurch gekennzeichnet, dass**, wenn die Bewegung des Stellglieds (2) durch eine Lenkradsteuerung (6) gesteuert wird, der virtuelle Endlagengrenzwert (S1, S2) der extremen Einschlagwinkelposition des besagten Lenkrads (6), die dem mechanischen Bewegungsgrenzwert (P1, P2) des Stellglieds (2) in der angenommenen Einschlagrichtung entspricht, um 30 Grad bis 60 Grad, und vorzugsweise um etwa 50 Grad vorausgeht.

5. Verfahren nach einem der vorhergehenden Ansprüche, **dadurch gekennzeichnet, dass** es als Diebstahlsicherungsverfahren verwendet wird, indem man den (die) virtuellen Endlagengrenzwert(e) (S1, S2) parametriert, sodass der Unterstützungsmotor (1) verwendet wird, um die Bewegung des Stellglieds (2) einer Lenkung in einer unveränderlichen Position zu blockieren, oder die besagte Bewegung innerhalb eines vorbestimmten Klemmbereichs von weniger als 50%, als 30% oder gar 10% des entsprechenden Bewegungsbereichs zu beschränken, der dem normalen funktionellen Weg (L0) des besagten Stellglieds (2) entspricht.

6. Verfahren nach Anspruch 5, **dadurch gekennzeichnet, dass** die Diebstahlsicherungseinstellung des virtuellen Anschlags (13) den Werten der Koeffizienten für Steifheit ( $K_P^{VRE}$ ), Viskosität ( $K_D^{VRE}$ ) und/ oder Trägheit ( $K_{D2}^{VRE}$ ) entspricht, die strengstens größer sind, als jene, die für die virtuellen Anschläge (13) verwendet werden, die bei der normalen Fortbewegung angewendet werden.

7. Verfahren nach einem der vorhergehenden Ansprüche, **dadurch gekennzeichnet, dass** es als Verfahren zur Einstellung der Symmetrie eines Fahrzeug-Fahrwerks verwendet wird, das zumindest ein Ausführungsglied (3, 4) umfasst, das durch ein lenkbares Rad gebildet wird, im Laufe dessen man einen ersten linken virtuellen Endlagengrenzwert (S1) und einen zweiten rechten virtuellen Endlagengrenzwert (S2) festlegt, sodass sich der erste virtuelle Endlagengrenzwert und der zweite virtuelle Endlagengrenzwert in einem selben Abstand beiderseits einer zentralen Mittelposition (P0) befinden, die einem nicht vorhandenen Einschlag des oder der lenkbaren Rades (Räder) (3, 4) des Fahrwerks entspricht.

**Claims**

1. A method for managing a steering (5) assist motor (1), during which is developed an assist setpoint (Ctot) intended to be applied to an assist motor (1) designed to provide a force (*Effort assistance*) for assisting the operation of a steering actuator member (2), of the rack type, said actuator member (2) being movably mounted at least between a first position (P1) and a second position (P2), distinct one from the other, which delimit an operating stroke (L0) of said actuator member enabling the latter to change the orientation angle of a steering effector member (3, 4), of the steered wheel type, said method being **characterized in that** it includes:

   a step (a) of defining a virtual end-of-stroke threshold, comprising selecting at least one virtual end-of-stroke threshold (S1, S2) which corresponds to a fictitious engagement position of the actuator member (2) against a virtual stop (13), which fictitious engagement position is strictly comprised between the first position (P1) and the second position (P2),
   a position evaluation step (b), comprising evaluating the instantaneous position (Pt) of the actuator member (2) and comparing it with the virtual end-of-stroke threshold (S1, S2) in order to detect a crossing (F1, F2) of said virtual end-of-stroke threshold by said actuator member and, if it is detected that the actuator member (2) has crossed said virtual end-of-stroke threshold (S1, S2) in a predetermined crossing direction,
   a step (c) of simulating the end-of-stroke stop that comprises including in the assist setpoint (Ctot) a resistance setpoint (*Couple$_{Butée}$*) which simulates the effect of a mechanical stop (13) by opposing the advancement, in the considered crossing direction (F1, F2), of the actuator member (2) beyond the virtual end-of-stroke threshold (S1, S2), so as to prevent the actuator member from reaching its abutting position against real stops of the steering.
   and **in that** the resistance setpoint (*Couple$_{Butée}$*) is obtained

   - by an expression of the first order simulating a spring-damper stop (13) and which comprises for this purpose an elastic component ( $F_E = K_P^{VRE} \cdot X_{Rack}$ ), simulating a spring effect, which is proportional, according to a predetermined stiffness coefficient ( $K_P^{VRE}$ ), to the amplitude of the displacement ($X_{Rack}$) of the actuator member (2) beyond the virtual end-of-stroke threshold (S1, S2) and a viscous component ( $F_V = K_D^{VRE} \cdot \dot{X}_{Rack}$ ), simulating a damper effect, which is proportional, according to a predetermined viscosity coefficient ( $K_D^{VRE}$ ), to the displacement speed $\dot{X}_{Rack}$ of the actuator member (2),
   - or by an expression of the second order simulating a mass-spring-damper stop (13) and which comprises for this purpose an elastic component ($F_E$), a viscous component ($F_v$), and an inertial component ( $F_I = K_{D2}^{VRE} \cdot \ddot{X}_{Rack}$ ), simulating a movable mass effect, which is proportional, according to a predetermined inertia coefficient ( $K_{D2}^{VRE}$ ), to the acceleration ($\ddot{X}_{Rack}$) of the actuator member (2).

2. The method according to claim 1, **characterized in that** the virtual end-of-stroke thresholds (S1, S2) and/or the stiffness ( $K_P^{VRE}$ ), viscosity ( $K_D^{VRE}$ ) and inertia ( $K_{D2}^{VRE}$ ) coefficients are changed depending on at least one parameter among: the displacement speed (Vv) of the vehicle on which the steering assist motor is installed, the torque ($\tau_v$) exerted by the driver on a steering wheel (6) which controls the displacement of the actuator member (2), the position (Pt, $X_{Rack}$), the speed ($\dot{X}_{Rack}$) or the acceleration ($\ddot{X}_{Rack}$) of the actuator member (2).

3. The method according to claim 2, **characterized in that,** when the vehicle circulates beyond a predetermined high speed threshold, the damping of the virtual stop (3) is increased.

4. The method according any of the preceding claims, **characterized in that,** the displacement of the actuator member (2) being controlled by a steering wheel (6), the virtual end-of-stroke threshold (S1, S2) precedes by 30 degrees to 60 degrees, and preferably by about 50 degrees, the extreme steering angular position of said steering wheel (6) which corresponds to the mechanical displacement limit (P1, P2) of the actuator member (2) in the considered steering direction.

5. The method according to any of the preceding claims, **characterized in that** it is used as an anti-theft method by setting the virtual end-of-stroke threshold(s) (S1, S2) so as to use the assist motor (1) for blocking the displacement of the steering actuator member (2) in an invariant position, or restricting said displacement within a predetermined clamping range, less than 50%, than 30%, or even than 10% of the range of displacement corresponding to the normal operating stroke (L0) of said actuator member (2).

6. The method according to claim 5, **characterized in that** the anti-theft setting of the virtual stop (13) corresponds to values of the stiffness ( $K_P^{VRE}$ ), viscosity ( $K_D^{VRE}$ ) and/or inertia ( $K_{D2}^{VRE}$ ) coefficients which are strictly higher than those used for the virtual stops (13) implemented during the normal driving.

7. The method according to any of the preceding claims, **characterized in that** it is used as a method for adjusting the symmetry of a vehicle running gear including at least one effector member (3, 4) formed by a steered wheel, during which a first left virtual end-of-stroke threshold (S1) and a second right virtual end-of-stoke threshold (S2) are fixed so that the first virtual end-of-stroke threshold and the second virtual end-of-stroke threshold are located equidistantly on either side of a median central position (P0) which corresponds to an absence of turning of the steered wheel(s) (3, 4) of the running gear.

**Fig. 1**

**Fig. 2**

**Fig. 3**

**Fig. 4**

Fig. 5

Fig. 6